# EUROPÄISCHE PATENTSCHRIFT

(11) **EP 0 729 547 B1**
(45) Veröffentlichungstag und Bekanntmachung des Hinweises auf die Patenterteilung: **23.12.1998**
(21) Anmeldenummer: 95926841.8
(22) Anmeldetag: 03.08.1995
(51) Int. Cl.: F02P 19/02, F23Q 7/00, F02N 17/08

(54) **STARTHILFEVORRICHTUNG, INSBESONDERE FÜR DIESELMOTOREN**
STARTING AID SYSTEM, ESPECIALLY FOR DIESEL ENGINES
SYSTEME D'AIDE AU DEMARRAGE, NOTAMMENT POUR MOTEURS DIESEL

(30) Priorität: 03.09.1994 DE 4431477
(43) Veröffentlichungstag der Anmeldung: 04.09.1996
(73) Patentinhaber: ROBERT BOSCH GMBH, 70442 Stuttgart (DE)
(72) Erfinder: GROTHE, Wolfgang, D-75233 Tiefenbronn (DE); GRÜNWALD, Werner, D-70839 Gerlingen (DE)
(86) Internationale Anmeldenummer: DE9501010
(87) Internationale Veröffentlichungsnummer: WO9607823

(56) Entgegenhaltungen:
- WO-A-94/15206
- DE-A- 3 231 122
- DE-A- 3 918 678
- US-A- 4 541 899
- US-A- 4 586 476

## Beschreibung

### Stand der Technik

Die Erfindung betrifft eine Starthilfevorrichtung für Dieselmotoren nach der Gattung des Hauptanspruchs.

Um kalte Dieselmotoren starten zu können, sind verschiedene Starthilfeeinrichtungen bekannt, wie beispielsweise Glühstiftkerzen beziehungsweise Flammkerzen. Die Starthilfeeinrichtungen werden im Verbrennungsraum oder im Ansaugrohr von Dieselmotoren angeordnet und mit ihnen der mittels eines Einspritzstrahls in den Verbrennungsraum oder in das Ansaugrohr eingeleitete Dieselkraftstoff zur Zündung gebracht. Die Zündtemperatur wird bei Glühstiftkerzen durch einen elektrisch erhitzten Glühstift erzielt, dessen Temperatur bei über 1000° C liegen kann.

### Vorteile der Erfindung

Die erfindungsgemäße Starthilfevorrichtung mit den kennzeichnenden Merkmalen des Hauptanspruchs hat demgegenüber den Vorteil, daß die Zündtemperatur abgesenkt werden kann und gleichzeitig eine leichtere Zündung des Kraftstoff-/Luftgemischs möglich ist. Dadurch wird erreicht, daß der Motor beim Kaltstart ein gleichmäßigeres Hochlaufverhalten aufweist.

### Zeichnung

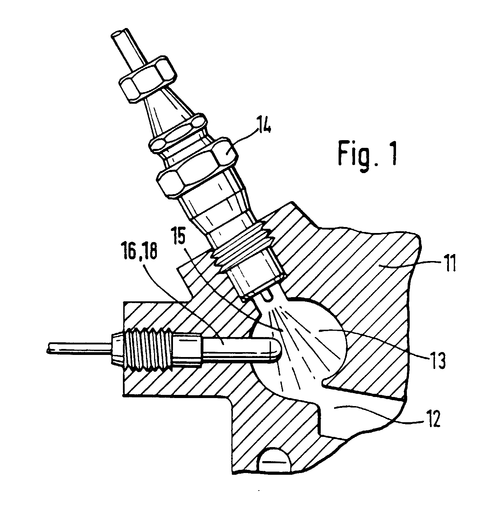

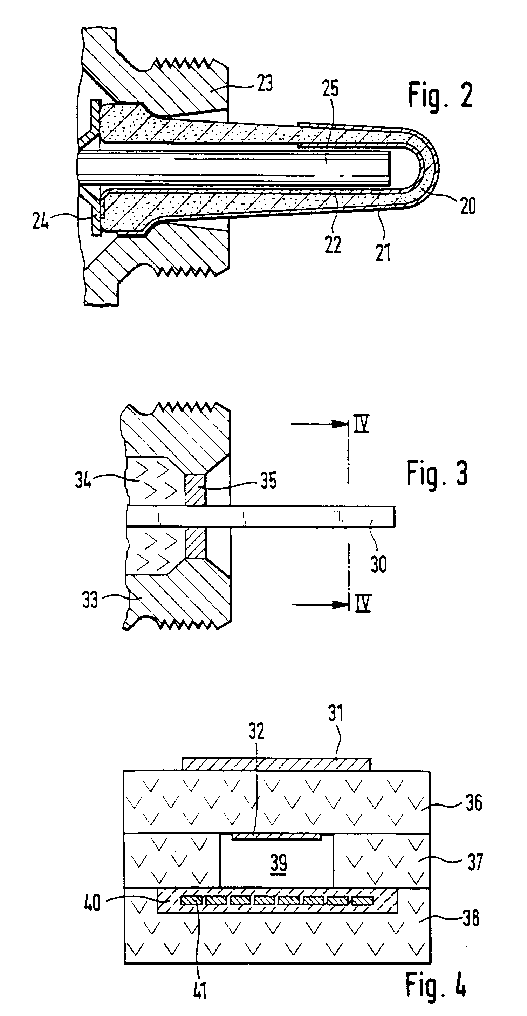

Ein Ausführungsbeispiel der Erfindung ist in der Zeichnung dargestellt und in der nachfolgenden Beschreibung näher erläutert. Figur 1 zeigt einen Brennraum mit einer Vorkammer eines Dieselmotors, Figur 2 eine Sauerstoff-Pumpzelle in Fingerbauform, Figur 3 eine Sauerstoff-Pumpzelle mit planarem Festelektrolytkörper und Figur 4 einen Querschnitt durch den Festelektrolytkörper gemäß Figur 3.

### Ausführungsbeispiel

Ein Dieselmotor mit einem Motorblock 11 hat einen Brennraum 12 mit einer Vorkammer 13. In den Motorblock 11 ist ein Einspritzventil 14 mit einem Einspritzstrahl 15 derart eingesetzt, daß der Einspritzstrahl 15 in die Vorkammer 13 geführt ist. In der Vorkammer 13 ist weiterhin eine Starthilfeeinrichtung 16 positioniert, die bis in die Randzone des Einspritzstrahls 15 reicht.

Die Starthilfeeinrichtung 16 ist eine auf der Basis eines sauerstoffionenleitenden Festelektrolyten arbeitende Sauerstoff-Pumpzelle 18. Als Festelektrolytkeramik wird beispielsweise mit Y₂O₃ stabilisiertes Zirkondioxid eingesetzt. Die Festelektrolytkeramik kann gemäß Figur 2 aus einem einseitig geschlossenen rohrförmigen Festelektrolytkörper 20 in Fingerbauform oder aber gemäß Figur 3 und 4 als plättchenförmiger Festelektrolytkörper 30 ausgeführt sein.

Der rohrförmige Festelektrolytkörper 20 gemäß Figur 1 ist in ein metallisches Gehäuse 23 eingesetzt und besitzt an seiner äußeren Oberfläche eine erste Elektrode 21 und an seiner inneren Oberfläche eine zweite Elektrode 22. Die Elektroden 21, 22 sind mit Leiterbahnen versehen, wobei die Elektrode 21 mit dem Gehäuse 23 und die Elektrode 22 mit einem Kontaktteil 24 kontaktiert ist. Im Inneren des Festelektrolytkörpers 20 ist ein stabförmiges Heizelement 25 angeordnet.

Der plättchenförmige Festelektrolytkörper 30 gemäß Figur 3 ist ebenfalls in einem metallischen Gehäuse 33 mit Haltemitteln 34 und Dichtmitteln 35 befestigt. Der Festelektrolytkörper 30 besteht gemäß Figur 4 beispielsweise aus einer ersten Festelektrolytfolie 36, einer zweiten Festelektrolytfolie 37 und einer dritten Festelektrolytfolie 38. In die zweite Festelektrolytfolie 37 ist ein Kanal 39 eingestanzt, der gehäuseseitig geöffnet ist und mit der Atmosphäre in Verbindung steht. Am einspritzstrahlseitigen Ende ist der Kanal 39 geschlossen. Auf der ersten Festelektrolytfolie 36 ist eine äußere erste Elektrode 31 und eine im Kanal 39 positionierte zweite Elektrode 32 angeordnet. In die dritte Festelektrolytfolie 38 ist in eine elektrische Isolation 40 ein Heizer 41 eingebettet.

Das Heizerelement 25 des rohrförmigen Festelektrolytkörpers 20 und der Heizer 41 des plättchenförmigen Festelektrolytkörpers 30 dienen dazu, um die Keramik der Festelektrolytkörper auf die entsprechende Betriebstemperatur zu bringen, die zur Ausbildung einer Sauerstoffionenleitung notwendig ist. Die Sauerstoffionenleitung und damit der Sauerstofftransport setzen dabei bereits bei einer Temperatur von etwa 300° C ein. Zweckmäßig ist es, mit den Heizeinrichtungen 25, 41 gleichzeitig die Zündtemperatur für das Kraftstoff-/Luftgemisch zu realisieren.

An die Elektroden 21 und 22 des rohrförmigen Festelektrolytkörpers 20 gemäß Figur 2 und an die Elektroden 31, 32 des plättchenförmigen Festelektrolytkörpers 30 gemäß Figur 3 und 4 wird eine Pumpspannung von beispielsweise 800 mV angelegt, wobei die Pumpspannung derart gepolt ist, daß die in die Vorkammer 13 weisenden Elektroden 21, 31 jeweils als Anode und die mit der Atmosphäre in Verbindung stehenden Elektroden 22, 32 jeweils als Kathode geschaltet sind. Dadurch gelangt molekularer Sauerstoff aus der Atmosphäre unter Ausnutzung des Sauerstoffpumpphänomens in Festelektrolytkeramiken von der als Kathode geschalteten Elektrode 22, 32 zu der als Anode geschalteten Elektrode 21,31. Dies führt dazu, daß der Sauerstoff an den Elektroden 21, 31 austritt und dadurch der im Einspritzstrahl 15 vorhandene Dieseldampf wenigstens in einem kleinen Volumen vor der heißen Anode mit dem dort angereicherten Sauerstoff reagieren kann. Durch die in dieser Zone vorhandene hohe Sauerstoffkonzentration wird, von dieser Zone ausgehend, die Zündung des Kraftstoff/Luftgemischs eingeleitet.

## Patentansprüche

1. Starthilfevorrichtung für einen Dieselmotor mit einer in einem Verbrennungsraum oder in einem Ansaugrohr angeordneten Starthilfeeinrichtung, welche einen in den Verbrennungsraum oder das Ansaugrohr eingeleiteten Einspritzstrahl eines Kraftstoffs in einen zündfähigen Zustand bringt, gekennzeichnet durch eine auf der Basis eines sauerstoffionenleitenden Festelektrolyten arbeitende Sauerstoff-Pumpzelle (18), mit welcher Sauerstoff zumindest in die Randzone des Einspritzstrahls (15) gepumpt wird.

2. Starthilfevorrichtung nach Anspruch 1, dadurch gekennzeichnet, daß die Pumpzelle (18) eine erste Elektrode (21, 31) und eine zweite Elektrode (22, 32) aufweist, wobei zumindest eine der Elektroden (21, 31) sich im Bereich des Einspritzstrahls (15) befindet, und daß eine Pumpspannung an die Elekroden (21, 22, 31, 32) derart angelegt ist, daß Sauerstoff von der einen Elektrode zu der im Einspritzstrahl (15) angeordneten Elektrode gepumpt wird.

3. Starthilfevorrichtung nach Anspruch 2, dadurch gekennzeichnet, daß die andere Elektrode (22, 32) mit der Atmosphäre in Verbindung steht, so daß Sauerstoff aus der Atmosphäre in den Verbrennungsraum (12, 13) gepumpt wird.

4. Starthilfevorrichtung nach Anspruch 3, dadurch gekennzeichnet, daß die Pumpzelle (18) einen rohrförmigen Festelektrolytkörper (20) aufweist, der am einspritzstrahlseitigen Ende geschlossen ist und mit seinem offenen Ende mit der Atmosphäre in Verbindung steht.

5. Starthilfevorrichtung nach Anspruch 2, dadurch gekennzeichnet, daß die Pumpzelle (18) einen plättchenförmigen Festelektrolytkörper (30) aufweist, bei dem die eine Elektrode (31) im Einspritzstrahl (15) und die andere Elektrode (32) vom Einspritzstrahl (15) abgewandt auf dem plättchenförmigen Festelektrolytkörper (30) angeordnet ist.

6. Starthilfevorrichtung nach Anspruch 5, dadurch gekennzeichnet, daß der Festelektrolytkörper (30) einen mit der Atmosphäre in Verbindung stehenden Kanal (39) aufweist, in dem die andere Elektrode (32) angeordnet ist.

7. Starthilfevorrichtung nach Anspruch 4, 5 oder 6, dadurch gekennzeichnet, daß der Festelektrolytkörper (20, 30) aus stabilisiertem ZrO₂ besteht.

8. Starthilfeeinrichtung nach Anspruch 1, dadurch gekennzeichnet, daß die Pumpzelle (18) eine Heizeinrichtung (25, 41) aufweist, mit der sowohl die Betriebstemperatur der Pumpzelle (18) als auch die Zündtemperatur des Kraftstoffs im Einspritzstrahl (15) einstellbar ist.

## Claims

1. Starting aid system for a diesel engine, having a starting aid device which is arranged in a combustion space or in an intake manifold and which changes an injection cone of a fuel introduced into the combustion space or the intake manifold into an ignitable state, characterized by an oxygen pump cell (18) which operates on the basis of an oxygen ion-conducting solid electrolyte and with which oxygen is pumped at least into the peripheral zone of the injection cone (15).

2. Starting aid system according to Claim 1, characterized in that the pump cell (18) has a first electrode (21, 31) and a second electrode (22, 32), at least one of the electrodes (21, 31) being located in the region of the injection cone (15), and in that a pump voltage is applied to the electrodes (21, 22, 31, 32) in such a way that oxygen is pumped from the one electrode to the electrode arranged in the injection cone (15).

3. Starting aid system according to Claim 2, characterized in that the other electrode (22, 32) is connected to the atmosphere in such a way that oxygen from the atmosphere is pumped into the combustion space (12, 13).

4. Starting aid system according to Claim 3, characterized in that the pump cell (18) has a tubular solid electrolyte body (20) which is closed at the injection cone-side end and is connected to the atmosphere by its open end.

5. Starting aid system according to Claim 2, characterized in that the pump cell (18) has a platelet-shaped solid electrolyte body (30) in which the one electrode (31) is arranged in the injection cone (15) and the other electrode (32) is arranged facing away from the injection cone (15) on the platelet-shaped solid electrolyte body (30).

6. Starting aid system according to Claim 5, characterized in that the solid electrolyte body (30) has a passage (39) which is connected to the atmosphere and in which the other electrode (32) is arranged.

7. Starting aid system according to Claims 4, 5 or 6, characterized in that the solid electrolyte body (20, 30) is composed of stabilized ZrO₂.

8. Starting aid system according to Claim 1, characterized in that the pump cell (18) has a heater (25, 41) with which both the operating temperature of the pump cell (18) and the ignition temperature of the fuel in the injection cone (15) can be set.

## Revendications

1. Système d'aide au démarrage pour un moteur Diesel, avec un système d'aide au démarrage disposé dans un tuyau d'aspiration, qui met un jet d'injection de carburant, introduit dans la chambre de combustion ou le tuyau d'admission en état de pouvoir s'allumer,
caractérisé par
une cellule de pompage à oxygène (18), qui fonctionne sur la base d'un électrolyte solide conduisant les ions oxygène, cellule de pompage (18) avec laquelle on pompe de l'oxygène au moins dans la zone de bordure du jet d'injection (15).

2. Système d'aide au démarrage selon la revendication 1,
caractérisé en ce que
- la cellule de pompage (18) présente une première électrode (21, 31) et une deuxième électrode (22, 32), au moins l'une des électrodes (21, 31) se trouvant dans la zone du jet d'injection (15) et
- une tension de pompage est appliquée aux électrodes (21, 22, 31, 32) d'une manière telle que l'oxygène est pompé de l'une des électrodes à l'électrode disposée dans le jet d'injection (15).

3. Système d'aide au démarrage selon la revendication 2,
caractérisé en ce que
l'autre électrode (22, 32) est en liaison avec l'atmosphère, de telle sorte que de l'oxygène est pompé à partir de l'atmosphère dans la chambre de combustion (12, 13).

4. Système d'aide au démarrage selon la revendication 3,
caractérisé en ce que
la cellule de pompage (18) présente un corps d'électrolyte solide de forme tubulaire (20), qui est fermé à l'extrémité située du côté du jet d'injection, et est en liaison par son extrémité ouverte avec l'atmosphère.

5. Système d'aide au démarrage selon la revendication 2,
caractérisé en ce que
la cellule de pompage (18) présente un corps d'électrolyte solide en forme de plaquette (30), dans lequel l'une des électrodes (31) est disposée dans le jet d'injection (15) et l'autre électrode (32) est située à l'opposé du jet d'injection (15) sur le corps d'électrolyte solide (30) en forme de plaquette.

6. Système d'aide au démarrage selon la revendication 5,
caractérisé en ce que
le corps d'électrolyte solide (30) présente un canal (39), qui se trouve en liaison avec l'atmosphère, canal (39) dans lequel est disposé l'autre électrode (32).

7. Système d'aide au démarrage selon la revendication 4,5 ou 6,
caractérisé en ce que
le corps d'électrolyte solide (20, 30) est réalisé en dioxyde de zirconium stabilisé.

8. Système d'aide au démarrage selon la revendication 1,
caractérisé en ce que
la cellule de pompage (18) présente un système de chauffage (25, 41) avec lequel on peut régler aussi bien la température de fonctionnement de la cellule de pompage (18) que la température d'allumage du carburant aussi dans le jet d'injection (15).
